# DEMANDE DE BREVET EUROPEEN

(11) **EP 4 283 806 A2**
(43) Date de publication de la demande: **29.11.2023**
(21) Numéro de dépôt: 23201324.3
(22) Date de dépôt: 31.08.2016
(51) Int. Cl.: H02G 3/04

(54) **ÉLÉMENT DE RACCORDEMENT DE TRONÇONS DE CHEMIN DE CÂBLES EN TREILLIS DE FILS**

(30) Priorité: 06.11.2015 FR 1560677
(62) Demande divisionnaire de: 16186601.7
(71) Demandeur: Niedax France, 75002 Paris (FR)
(72) Inventeur: PENICHON, Mickaël, 75002 Paris (FR); DUCHENE, Marc, 75002 Paris (FR); DELFORGE, David, 75002 Paris (FR)
(74) Mandataire: Demulsant, Xavier

(57) **Abrégé**

Un tronçon (**1**) de chemin de câbles en treillis de fil comprenant une pluralité de supports (**3**) comprenant un fond (**4**) définissant un plan (**6**) de fond et deux ailes (**5**) latérales, les supports étant reliés entre eux par au moins un fil (**2**), dans lequel entre deux supports successifs, un fil de chaîne est en forme de V et s'étend dans un plan sensiblement parallèle au plan de fond.

## Description

L'invention a trait au domaine des chemins de câbles.

Les chemins de câbles permettent le support de câbles sur de grandes hauteurs (en configuration verticale) ou de grandes longueurs (en configuration horizontale), notamment de câbles électriques, câbles téléphoniques, câbles de fibre optique, ou encore de câbles de réseau informatique.

Les chemins de câbles sont formés de tronçons, généralement réalisés en métal, notamment en acier, acier inoxydable, ou le cas échéant en matériau polymère ou composite.

A partir de ces tronçons, on constitue les réseaux de chemins de câbles que l'on souhaite.

Pour ce faire, on positionne bout à bout les tronçons de chemins de câbles et on immobilise conventionnellement ces tronçons à l'aide de pièces de jonction, typiquement des éclisses, des plaquettes plates, éventuellement articulées, ou bien encore à l'aide de cornières.

Les tronçons sont également fixés, de place en place, sur des consoles et des pendards, ou bien encore suspendus, la distance entre les supports étant typiquement de l'ordre d'un mètre cinquante.

On distingue deux types de tronçons de chemins de câbles, à savoir les tronçons en tôle (perforée ou non) et les tronçons en treillis de fil.

L'invention vise plus particulièrement les chemins de câbles comprenant des tronçons en treillis de fil.

Les tronçons en treillis de fil comprennent typiquement des fils longitudinaux, appelés fils de chaîne, et des fils de trame transversaux, croisés et soudés avec les fils de chaîne, conférant le plus souvent au treillis une section en U, comprenant un fond et deux ailes latérales.

Les tronçons peuvent subir un traitement ultérieur, en fonction de l'environnement dans lequel ils sont destinés à être placés. Ainsi, les tronçons métalliques peuvent subir une galvanisation, être plastifiés ou encore revêtus d'une couche de résine époxy.

Les chemins de câbles en treillis de fils présentent de nombreux avantages, par rapport aux tronçons en tôle : ventilation des câbles, possibilité de repérage visuel des câbles, réduction du risque de rétention microbienne et de rétention de poussières.

Les chemins de câbles comportent des changements de direction (coudes, virage).

Pour les chemins de câbles en treillis de fils, la réalisation d'un coude peut se faire de deux manières différentes.

Selon une première méthode, une découpe partielle de fils des tronçons est effectuée, par exemple à l'aide d'un coupe-boulon, et un accessoire d'assemblage est mis en place. Selon une deuxième méthode, est utilisé un tronçon dont les fils de chaîne sont interrompus entre deux fils de trames successifs.

On connaît du document DE 7120422 (RAHMER), un tronçon de chemin de câbles en treillis de fils comprenant une pluralité de supports à section transversale en U, reliés deux à deux par des fils cintrés. Ces supports comprennent un fond définissant un plan de fond, et deux ailes latérales.

Le tronçon de chemin de câbles décrit dans ce document antérieur présente de nombreux inconvénients. En particulier, la réalisation précise de coudes ou virage est très délicate, et la fabrication des tronçons est fastidieuse et coûteuse.

L'invention vise à proposer un élément de raccordement pour chemins de câbles dont la manipulation permet de créer des coudes, de courbure précise, l'élément de raccordement permettant de réaliser des coudes sans utiliser d'outils, le tronçon étant facile à produire, et présentant une grande robustesse.

A ces fins, il est proposé, en premier lieu, un élément de raccordement pour chemins de câbles, comprenant une pluralité de supports comprenant un fond définissant un plan de fond et deux ailes latérales, les supports étant reliés entre eux par au moins un fil, dans lequel, entre deux supports successifs, un fil de chaîne est en forme de V et s'étend dans un plan sensiblement parallèle au plan de fond.

Un tel élément de raccordement permet de produire des coudes précis et localisés, sans outils.

Diverses caractéristiques supplémentaires peuvent être prévues, seules ou en combinaison :
- l'élément de raccordement comprend deux fils de chaîne en forme de V et s'étendant dans un plan sensiblement parallèle au plan de fond, en face externe de l'élément de raccordement ;
- les fils de chaîne sont ininterrompus sur la longueur de l'élément de raccordement ;
- l'élément de raccordement comprend au moins trois supports, à savoir un support mâle situé à une première extrémité de l'élément de raccordement, un support femelle situé à une seconde extrémité de l'élément de raccordement et au moins un support intermédiaire, situé entre le support mâle et le support femelle ;
- la longueur d'un espace séparant deux supports voisins est sensiblement égale à la longueur des supports ;
- entre deux supports successifs, chaque fil de chaîne forme un premier virage au voisinage d'un fil de trame d'un support, un deuxième virage formant un sommet sensiblement à mi-distance entre les deux supports successifs, et un troisième virage au voisinage du fil de trame du support voisin ;
- l'angle des sommets est compris entre 20° et 110°, dans certaines mises en oeuvre ;
- l'angle des sommets vaut 74°, dans des mises en oeuvre particulières.

Il est proposé, en second lieu, un chemin de câbles comprenant au moins un élément de raccordement tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un élément de raccordement ;
- la figure 2 est une vue en perspective de l'élément de raccordement de la figure 1, coudé ;
- la figure 3 est une vue de côté de l'élément de raccordement de la figure 2 ;
- la figure 4 est une vue en perspective de l'élément de raccordement de la figure 1, coudé différemment ;
- la figure 5 est une vue de dessus de l'élément de raccordement de la figure 4 ;
- la figure 6 est une vue de dessus d'un élément de raccordement selon une variante de réalisation ;
- la figure 7 de dessus de l'élément de raccordement de la figure 6, coudé ;
- la figure 8 est une vue de côté de l'élément de raccordement de la figure 6, coudé différemment.

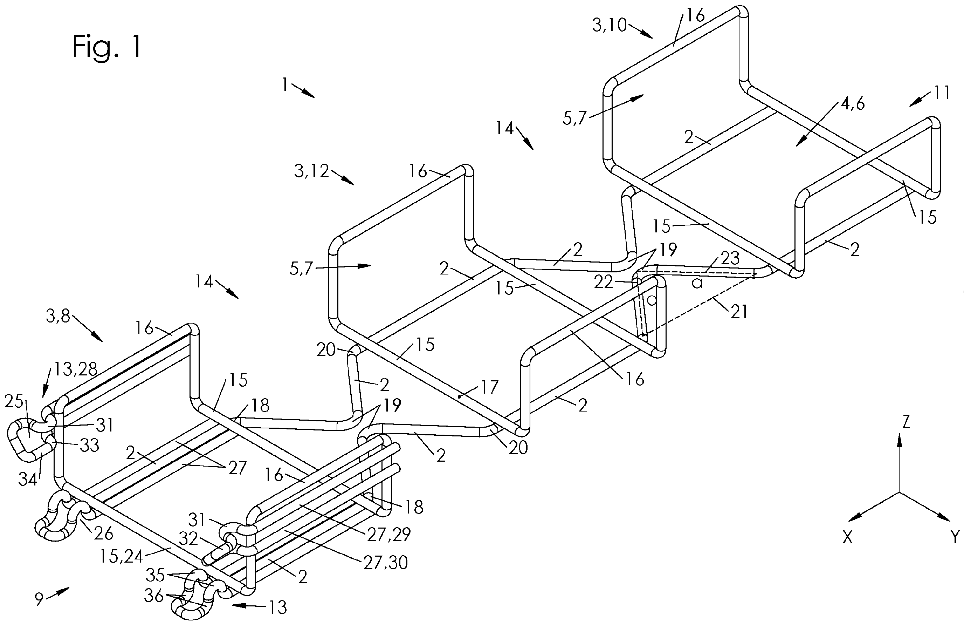

La figure 1 représente, en perspective, un élément de raccordement **1,** typiquement pour chemin de câbles en treillis de fil, l'élément de raccordement **1** étant formé par assemblage de fils **2** de chaîne et de supports **3** définissant un fond **4** et deux ailes **5** latérales.

Dans les modes de réalisation représentés, les ailes **5** latérales s'étendent de part et d'autre du fond **4,** sensiblement perpendiculairement par rapport à celui-ci.

En variante de réalisation, non représentée, les ailes **5** latérales de l'élément de raccordement **1** ne sont pas perpendiculaires au fond **4,** l'élément de raccordement **1** présentant ainsi une section évasée, de sorte à permettre l'empilement des éléments de raccordement **1** les uns dans les autres.

L'élément de raccordement **1** peut présenter une section en V à fond plat, semblable à celle décrite pour des tronçons de chemins de câble dans les documents EP818862, WO2006076746, US2002030143.

On définit en référence à la figure 1 un repère orthogonal XYZ comprenant trois axes perpendiculaires deux à deux, à savoir :
- un axe X, définissant une direction longitudinale de l'élément de raccordement **1,** lorsque celui-ci n'est pas plié,
- un axe Y, définissant une direction transversale, qui avec l'axe X définit un plan XY,
- un axe Z, définissant une direction perpendiculaire au plan XY.

Dans la suite de cette description, une longueur est une distance mesurée selon l'axe X, une largeur est une distance mesurée selon l'axe Y et une hauteur est une distance mesurée selon l'axe Z.

Le fond **4** et les ailes **5** latérales définissent respectivement un plan **6** de fond, parallèle au plan XY, et deux plans **7** latéraux, parallèles au plan XZ.

Dans le mode de réalisation représenté sur les figures 1 à 5, l'élément de raccordement **1** comprend trois supports **3,** à savoir un support **8** mâle, situé à une première extrémité **9** de l'élément de raccordement **1,** un support **10** femelle situé à une seconde extrémité **11** de l'élément de raccordement **1,** et un support **12** intermédiaire situé, selon l'axe X, entre le support **8** mâle et le support **10** femelle.

Le support **8** mâle comprend des moyens **13** d'assemblage à un autre élément de raccordement adjacent ou à un tronçon de chemin de câbles, pourvus de moyens femelle.

Dans les modes de réalisation représentés, les moyens **13** d'assemblage du support **8** mâle sont fixés à l'élément de raccordement **1** et sont avantageusement conçus pour permettre un assemblage, sans outil, à une partie extrême conventionnelle d'un tronçon de chemins de câbles en fil, ou à un support **10** femelle d'un élément de raccordement **1.**

Dans d'autres modes de réalisation, non représentés, l'élément de raccordement comprend des éclisses rapportées, ou des éclisses articulées pré-montées.

Les supports **3** sont séparés les uns des autres par un espace **14.**

Dans les modes de réalisation représentés, chaque support **3** est pourvu de deux fils **15** de trame, reliés entre eux par deux fils **16** de rive.

Dans d'autres modes de réalisation, non représentés, au moins un des supports est en tôle, notamment une tôle pliée, le cas échéant perforée, les supports étant reliés entre eux par les fils de chaîne **2.**

Dans une mise en oeuvre, les supports **3** en fil sont fabriqués d'un seul tenant, c'est à dire qu'en partant d'un point **17** de départ quelconque situé sur l'un des fils **15** de trame, puis en suivant celui-ci, on revient vers ce point **17** de départ en ayant au préalable traversé un **fil 16** de rive, puis un fil **15** de trame et un autre **fil 16** de rive pour enfin revenir sur le fil **15** de trame de départ.

Dans d'autres mises en oeuvre, les supports **3** sont issus d'un assemblage de fils **15** de trame et de fils **16** de rive, par exemple par soudage.

Les supports **3** sont reliés entre eux par au moins un fil de chaîne, et de préférence par deux fils **2** de chaîne qui s'étendent depuis la première extrémité **9** jusqu'à la seconde extrémité **11.**

Dans les modes de réalisation représentés, les fils **2** de chaîne sont montés soudés sur l'extérieur des supports **3,** en dessous de l'élément de raccordement **1.**

La longueur des supports **3** est la distance qui sépare deux fils **15** de trame d'un même support **3.** La largeur d'un support **3** est la distance qui sépare deux fils **16** de rive d'un même support **3.**

Dans les mises en oeuvre représentées, la longueur de l'espace **14** séparant deux supports **3** successifs est identique à la longueur d'un support **3.** Toutefois, cette longueur de l'espace **14** pourrait être différente, de sorte à réduire la distance séparant les supports **3** ou augmenter la distance entre deux supports **3.**

Les fils **2** de chaîne reliant les supports **3** sont avantageusement d'un seul tenant, et sont ininterrompus sur toute la longueur de l'élément de raccordement **1.**

Sur la longueur des supports **3,** les fils **2** de chaîne sont longitudinaux, c'est à dire qu'ils s'étendent sensiblement selon une direction parallèle à l'axe X dans un plan sensiblement horizontal et sensiblement parallèle au plan XY. Dans les espaces **14,** les fils **2** de chaîne s'étendent en forme de V dans un plan sensiblement parallèle au plan XY.

A titre d'exemple, en référence à la figure 1, entre le support **8** mâle et le support **12** intermédiaire, chaque fil **2** de chaîne amorce
- un premier virage **18** au voisinage du support **8** mâle, vers l'intérieur de l'élément de raccordement **1,**
- puis un deuxième virage, appelé sommet **19,** environ à mi-distance entre les deux supports **3** et en direction de l'extérieur de l'élément de raccordement **1,**
- et enfin un troisième virage **20,** au voisinage du support **12** intermédiaire.

En vue de dessus (non représentée, selon l'axe Z), chaque fil **2** de chaîne présente une forme de V arrondie au sommet **19,** la concavité étant tournée vers l'extérieur de l'élément de raccordement **1.**

Un triangle est défini par :
- une ligne **21,** sensiblement parallèle à l'axe X et reliant le premier virage **18** au troisième virage **20,**
- un premier segment **22** de fil de chaine, reliant le premier virage **18** au sommet **19,**
- un deuxième segment **23** de fil de chaîne, reliant le troisième virage **20** au sommet **19.**

Dans les modes de réalisation représentés, le premier segment **22** et le deuxième segment **23** s'étendent sur une même distance **a.**

L'angle au sommet 19 est avantageusement compris entre environ 20° et environ 110°.

L'angle au sommet **19** est, dans certaines mises en oeuvre, de l'ordre de 75°.

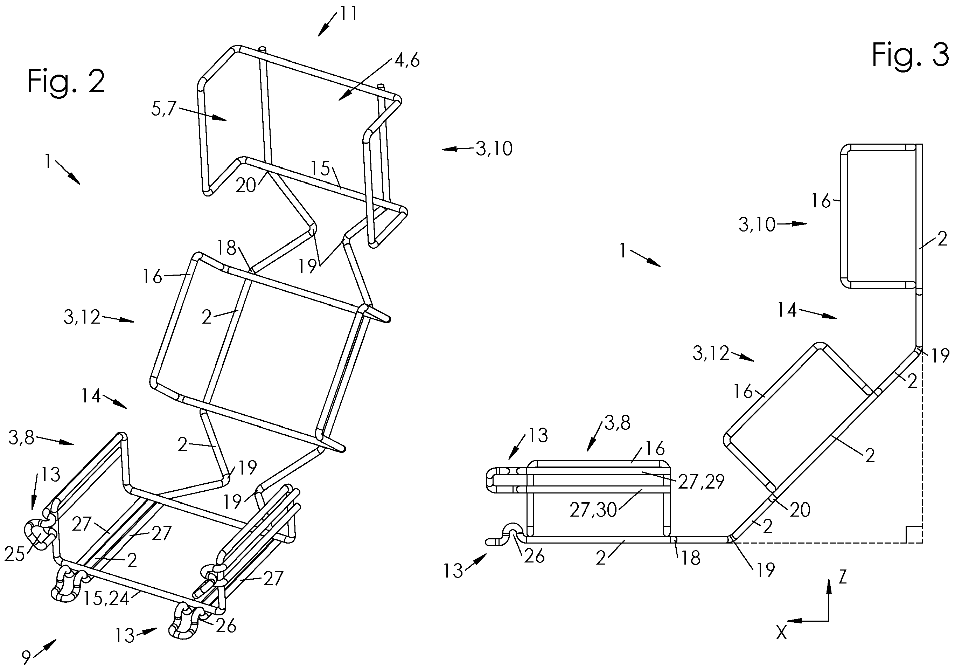

En référence aux figures 2 à 5, l'axe X est défini selon la direction du fil **2** de chaîne du support **8** mâle et l'axe Y est défini selon la direction du fil **15** de trame du support **8** mâle. L'axe Z est perpendiculaire aux axes X et Y.

Sur les figures 2 et 3, l'élément de raccordement **1** forme un coude à 90° autour de l'axe Y. Cet angle est mesuré entre le support **8** mâle et le support **10** femelle.

Afin d'atteindre un coude à 90°, il est avantageux de prévoir un premier pliage à 45° entre le support **8** mâle et le support **12** intermédiaire et un pliage à 45°, entre le support **12** intermédiaire et le support **10** femelle.

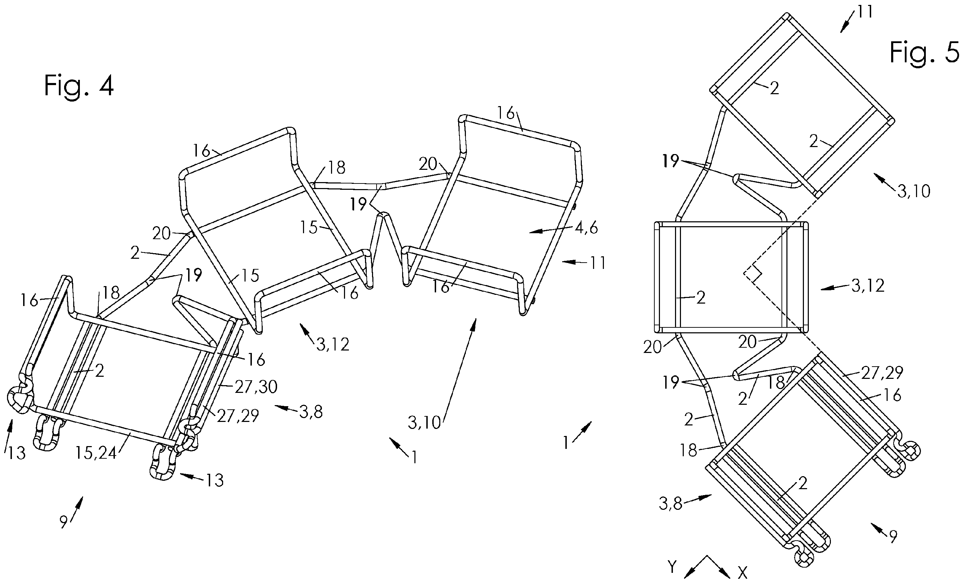

Une autre configuration est représentée sur les figures 4 et 5. Le coude est effectué autour de l'axe Z. L'angle entre le support **8** mâle et le support **10** femelle est de 90°.

Le pliage entre deux supports **3** successifs peut être effectué indépendamment du pliage entre deux autres supports **3** successifs. Par exemple, un angle de 40° peut être formé entre le support **8** mâle et le support **12** intermédiaire, puis un angle de 30° entre le support **12** intermédiaire et le support **10** femelle. Le coude est alors de 70° entre le support **8** mâle et le support **10** femelle.

Dans les modes de réalisation représentés, une pièce **13** d'assemblage est placée sur chaque aile **5** latérale et deux pièces **13** d'assemblage sont disposées sur le fond **4** de chaque tronçon. Ces pièces **13** d'assemblage sont avantageusement du type décrit dans le brevet EP2816687 de la demanderesse.

Le nombre de pièces **13** d'assemblage est adapté aux dimensions de l'élément de raccordement **1.**

Ces pièces **13** d'assemblage sont formées d'un fil replié sur lui-même, formant une partie saillante au-delà du fil **15** de trame situé à la première extrémité **9,** ci-après, fil de trame **24** d'extrémité.

Le fil employé pour la réalisation des pièces **13** d'assemblage est avantageusement le même que celui employé pour les fils **2** de chaîne et/ou les fils **15** de trame.

Les pièces **13** d'assemblage sont fixées par soudage sur l'extérieur des fils **15** de trame.

Plus précisément, les pièces **13** d'assemblage sont fixées sur les deux fils **15** de trame d'un même support **3.**

Les pièces **13** d'assemblage comprennent une boucle **25,26** saillante au-delà du fil de trame **24** d'extrémité et deux bras **27** longitudinaux s'étendant depuis la boucle **25,26.**

Les pièces **13** d'assemblage portées par les ailes **5** latérales comportent une boucle **25** latérale différente de la boucle **26** de fond des pièces **13** d'assemblage fixées sur le fond **4** de l'élément de raccordement **1.**

L'on décrit tout d'abord les pièces **13** d'assemblage portées par les ailes **5** latérales.

Une pièce **28** latérale d'assemblage portée par chaque aile **5** latérale de l'élément de raccordement **1** comporte un bras **29** supérieur et un bras **30** inférieur. Le bras **29** supérieur est situé au voisinage du fil **16** de rive.

Comme visible sur la figure 1, la boucle **25** latérale de la pièce **28** latérale d'assemblage comprend un crochet **31** dans le prolongement du bras **29** supérieur. Ce crochet **31** définit une concavité tournée vers l'extérieur de l'élément de raccordement **1,** cette concavité étant apte à venir en prise avec un fil **15** de trame d'un support **10** femelle adjacent, ou d'un tronçon de chemin de câbles.

La boucle **25** latérale de la pièce **28** latérale d'assemblage comprend, dans le prolongement du crochet **31,** une première portion **32** rectiligne, cette première portion **32** rectiligne étant sensiblement longitudinale, c'est à dire orientée selon l'axe X.

Dans le prolongement du bras **30** inférieur, la boucle **25** latérale de la pièce **28** latérale d'assemblage présente un décroché **33** s'étendant à l'aplomb du crochet **31.**

Dans le prolongement de ce décroché **33,** la boucle **25** latérale comprend une seconde portion **34** rectiligne, cette seconde portion **34** rectiligne étant sensiblement longitudinale.

La boucle **25** latérale des pièces **28** latérales d'assemblage est oblique, inclinée vers l'intérieur de l'élément de raccordement **1.**

Lorsque l'élément de raccordement **1** est vu en bout, les pièces **28** latérales d'assemblage ont un profil en Z inversé permettant de faciliter l'assemblage par encliquetage transversal, c'est à dire selon l'axe Z.

L'on décrit maintenant les pièces **13** d'assemblage fixées sur le fond **4** de l'élément de raccordement **1.**

Les bras **27** longitudinaux des pièces **13** d'assemblage fixées sur le fond **4** sont positionnés de part et d'autre des fils **2** de chaîne.

Les boucles **26** de fond des pièces **13** d'assemblage fixées sur le fond **4** des éléments de raccordement **1** se présentent sous la forme d'une chicane comprenant une première section **35** courbe et une seconde section **36** courbe.

La première section **35** courbe présente une concavité tournée vers l'extérieur de l'élément de raccordement **1,** tandis que la seconde section **36** courbe présente une concavité tournée vers l'intérieur de l'élément de raccordement **1.**

Afin d'apporter une meilleure rigidité structurelle aux pièces **13** d'assemblage du fond **4** de l'élément de raccordement **1,** l'espace entre la chicane et le fil de trame **24** d'extrémité est minimal, voir nul. Un tel agencement permet de rigidifier la boucle **26** de fond en flexion autour d'un axe parallèle au fil de trame **24** d'extrémité (axe Y), celui-ci servant de raidisseur contre lequel la première section **35** courbe prend appui.

Les deux sections **35,36** courbes présentent de préférence un profil en arc de cercle. La première section **35** courbe présente un rayon de courbure sensiblement égal au rayon des fils **15** de trame.

Le fil de trame **24** d'extrémité épouse ainsi au plus près la première section **35** courbe.

De même, la seconde section **36** courbe présente un rayon de courbure sensiblement égal ou légèrement supérieur, au rayon du fil de trame **24** d'extrémité. Il en résulte une certaine compacité de la boucle **26** de fond, au bénéfice de sa rigidité.

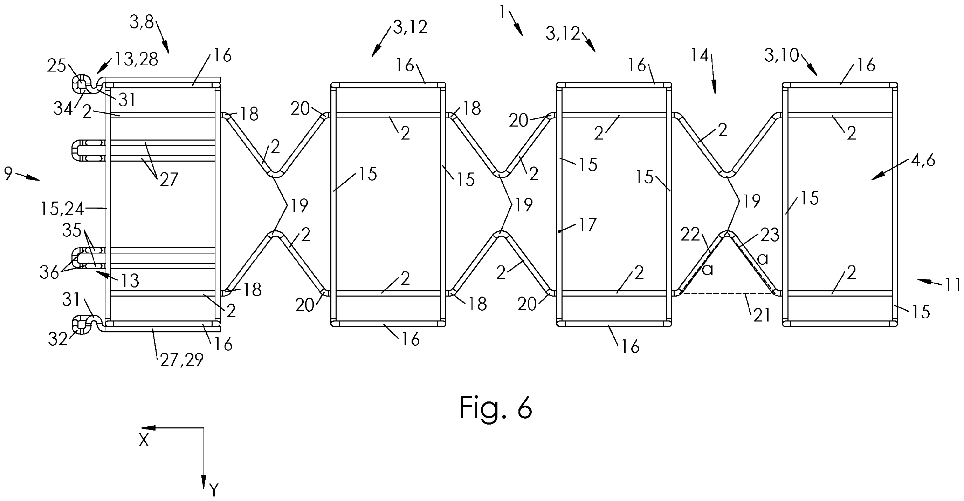

Dans un second mode de réalisation, représenté sur les figures 6 à 8, l'élément de raccordement **1** comprend quatre supports **3,** à savoir un support **8** mâle situé à une première extrémité **9,** un support **10** femelle situé à une seconde extrémité **11** et deux supports **12** intermédiaires, positionnés entre le support **8** mâle et le support **10** femelle.

Dans le mode de réalisation des figures 6 à 8, la longueur de l'élément de raccordement **1,** excepté les pièces **13** d'assemblage, est comprise entre 60 et 80 centimètres, de préférence 70 centimètres. L'angle des sommets **19** est compris entre environ 20° et environ 110°, et plus particulièrement entre 60° et 85°, et vaut de préférence 74°. La longueur des supports **3** et la longueur des espaces **14** sont comprises entre 5 centimètres et 20 centimètres, de préférence 10 centimètres. La largeur des supports **3** varie en fonction des besoins. Elle est comprise entre 10 centimètres et 50 centimètres et vaut de préférence 21,5 centimètres..

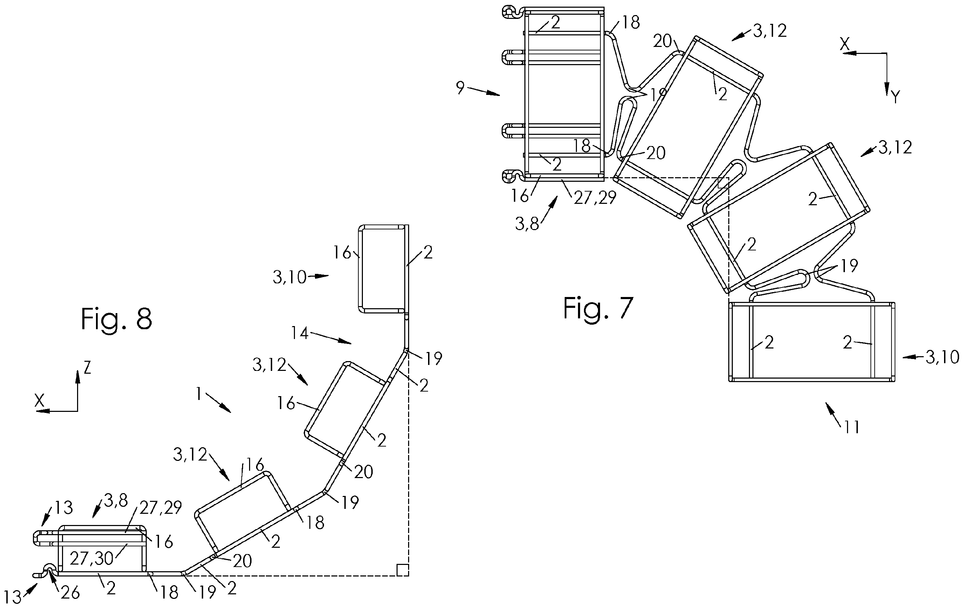

Sur la figure 7, l'élément de raccordement **1** forme un coude à 90° autour de l'axe Z. Dans cette configuration, l'angle des sommets **19** situés en périphérie extérieure de l'élément de raccordement **1** est de 60° environ. La distance entre le support **8** mâle et le support **10** femelle selon une direction parallèle à l'axe Y est d'environ 47,3 centimètres. Cette distance peut être adaptée selon les besoins. Par exemple, cette distance peut être supérieure ou inférieure, en jouant sur les angles aux sommets **19.**

Dans les modes de réalisation représentés sur les figures, les fils **2** de chaîne et les fils **15** de trame ont un diamètre identique. En variante, les fils **2** de chaîne et/ou les fils **15** de trame peuvent avoir un diamètre adapté aux charges prévues pour chaque partie de l'élément de raccordement **1.**

En variante, non représentée, les ailes **5** latérales peuvent comprendre deux fils **16** de rive ou plus, en fonction de la résistance aux charges souhaitées. Dans cette configuration, les pièces **28** latérales d'assemblage logent entre les deux fils **16** de rive.

L'élément de raccordement **1** est avantageusement assemblé à plat, les éléments destinés à former les supports **3** étant pliés en une seule étape de formage.

L'élément de raccordement **1** qui vient d'être décrit présente de nombreux avantages. En particulier, il permet de créer des coudes extrêmement précis, et sans l'utilisation d'outils.

## Revendications

1. Elément (1) de raccordement pour chemins de câbles, comprenant une pluralité de supports (3) comprenant un fond (4) définissant un plan (6) de fond et deux ailes (5) latérales, les supports (3) étant reliés entre eux par au moins un fil de chaîne ininterrompu sur toute la longueur de l'élément (1) de raccordement, les supports (3) étant séparés les uns des autres par un espace (14), l'élément (1) de raccordement comprenant un support (8) mâle situé à une première extrémité (9) de l'élément (1) de raccordement, un support (10) femelle situé à une seconde extrémité (11) de l'élément (1) de raccordement, et au moins un support intermédiaire situé entre le support (8) mâle et le support (10) femelle, le support (8) mâle comprenant des moyens (13) d'assemblage à un autre élément de raccordement adjacent ou à un tronçon de chemin de câbles pourvu de moyens femelles, **caractérisé en ce que** lorsque l'élément (1) de raccordement s'étend selon une direction longitudinale, entre deux supports (3) successifs, le fil (2) de chaîne reliant les supports (3) est en forme de V et s'étend dans un plan parallèle au plan (6) de fond, le fil (2) de chaîne formant un premier virage (18) au voisinage d'un fil (15) de trame d'un support (3), un deuxième virage formant un sommet (19) à mi-distance entre les deux supports (3) successifs, et un troisième virage au voisinage du fil (15) de trame du support (3) voisin.

2. Elément (1) de raccordement selon la revendication précédente, **caractérisé en ce qu'**il comprend deux fils (2) de chaîne en forme de V et s'étendant dans un plan parallèle au plan (6) de fond, en face externe de l'élément de raccordement (1).

3. Elément (1) de raccordement selon l'une quelconque des revendications précédentes, **caractérisé en ce que** la longueur d'un espace (14) séparant deux supports (3) voisins est égale à la longueur des supports (3).

4. Elément (1) de raccordement selon la revendication 1, **caractérisé en ce que** l'angle des sommets (19) est compris entre 20° et 110°.

5. Elément (1) de raccordement selon la revendication 4, **caractérisé en ce que** l'angle des sommets (19) vaut 74°.

6. Chemin de câbles comprenant au moins un élément (1) de raccordement selon l'une quelconque des revendications précédentes.
